(19) Europäisches Patentamt
European Patent Office
Office européen des brevets

(11) EP 0 669 337 B1

(12) **EUROPÄISCHE PATENTSCHRIFT**

(45) Veröffentlichungstag und Bekanntmachung des Hinweises auf die Patenterteilung:
**08.11.2000 Patentblatt 2000/45**

(51) Int. Cl.[7]: **C07F 7/08**, C07F 3/02, C07F 17/00, C07F 17/02 // C08F10/00

(21) Anmeldenummer: **94112300.2**

(22) Anmeldetag: **05.08.1994**

(54) **Verbrückte Cyclopentadienylmagnesium-Verbindungen und Verfahren zu ihrer Herstellung und ihre Verwendung zur Herstellung von Metallocenen**

Bridged cyclopentadienyl-magnesium compounds, their preparation and use in preparing metallocenes

Composées cyclopentadiènyl-magnésium, leur préparation et leur utilisation dans la préparation de metallocènes

(84) Benannte Vertragsstaaten:
**AT BE CH DE ES FR GB GR IT LI NL PT SE**

(30) Priorität: **25.02.1994 DE 4406110**

(43) Veröffentlichungstag der Anmeldung:
**30.08.1995 Patentblatt 1995/35**

(73) Patentinhaber: **Witco GmbH**
**59192 Bergkamen (DE)**

(72) Erfinder: **Lisowsky, Dr. Richard**
**D-59174 Kamen (DE)**

(56) Entgegenhaltungen:
**EP-A- 0 344 887** **EP-A- 0 416 815**
**US-A- 3 306 917**

Bemerkungen:
Die Akte enthält technische Angaben, die nach dem Eingang der Anmeldung eingereicht wurden und die nicht in dieser Patentschrift enthalten sind.

EP 0 669 337 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft neue verbrückte Cyclopentadienylmagnesium-Verbindungen der allgemeinen Formel $Q(CpR_a)$ $(Cp'R'_{a'})Mg$, Verfahren zu ihrer Herstellung sowie ihre Verwendung zur Herstellung von verbrückten Metallocenen.

Verbindungen der allgemeinen Formel $Q(CpR_a)(Cp'R'_{a}')Mg$ werden hergestellt durch Umsetzung von verbrückten Cyclopentadienyl-Verbindungen nach der Gleichung

$$Q(CpR_a)(CP'R'_{a'}) + (R^3R^4)_cMg \rightarrow Q(CpR_a)(Cp'R'_{a'})Mg + {}_cR^3H + {}_cR^4H.$$

Verbindungen der allgemeinen Formel $Q(CpR_a)(Cp'R'_{a'})Mg$ sind solche der allgemeinen Formel (1)

$$Q(CpR_a)(Cp'R'_{a'})Mg \qquad (1)$$

$$Q(CpR_a)(NR''_{a'})Mg \qquad (1a)$$

worin

Cp = ein Cyclopentadienyl- oder ein Indenylrest
R, R' = Alkyl-, Phosphin-, Amin-, Alkylether- oder Arylethergruppen mit $0 \leq a \leq 4$, $0 \leq a' \leq 4$
Cp' = eine der Gruppen Cp
R" = Alkyl- oder Arylrest mit a' = 1 und Q eine ein- oder mehrgliedrige Brücke zwischen Cp und Cp'oder N ist, mit
Q =

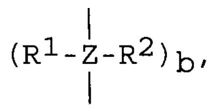

worin $R^1$ und $R^2$ gleich oder verschieden ein Wasserstoffatom, eine $C_1$-$C_{10}$-Alkylgruppe, eine $C_6$-$C_{10}$-Arylgruppe und Z Kohlenstoff, Silizium oder Germanium bedeuten mit b = 1, 2 oder 3.

Beispiele für die erfindungsgemäß einsetzbaren verbrückten Bis-cyclopentadienyl-Verbindungen sind Dimethylsilyl-bis(1-inden), Dimethylsilyl-bis(1-cyclopentadien), 2,2-Propyl-bis(1-inden), 2,2-Propyl-bis(trimethyl-cyclopentadien), 2,2-Propyl-bis(5-dimethylamino-1-inden), 2,2-Propyl-bis(6-dipropylamino-1-inden), 2,2-Propyl-bis(4,7-bis(dimethyl-amino-1-inden), 2,2-Propyl-bis(5-diphenylphosphino-1-inden), 2,2-Propyl-bis(4,5,6,7-tetrahydro-1-inden), 2,2-Propyl-bis(4-methyl-1-inden), 2,2-Propyl-bis(5-methyl-1-inden), 2,2-Propyl-bis(6-methyl-1-inden), 2,2-Propyl-bis(7-methyl-1-inden), 2,2-Propyl-bis(5-methoxy-1-inden), 2,2-Propyl-bis(4,7-dimethoxy-1-inden), 2,2-Propyl-bis(2,3-dimethyl-1-inden), 2,2-Propyl-bis(4,7-dimethyl-1-inden), 2,2-Propyl-bis(1-cyclopentadien), 2,2-Propyl-bis(1-inden), 2,2-Propyl-bis(1-inden)(1-cyclopentadien), Diphenylmethyl-bis(1-inden), Diphenylmethyl-bis(1-cyclopentadien), Diphenylmethyl-bis(1-inden), Diphenylmethyl-bis(1-inden)(1-cyclopentadien), Diphenylsilyl-bis(1-iden), Diphenylsilyl-bis(1-cyclopenta-dien), Diphenylsilyl-bis(1-inden), Diphenylsilyl-bis(1-inden)(1-cyclopentadien), Ethylen-bis(1-inden), Ethylen-bis(trimethylcyclo-pentadien), Ethylen-bis(5-dimethylamino-1-inden), Ethylen-bis(6-dipropylamino-1-inden), Ethylen-bis(4,7-bis(dimethylamino)-1-inden), Ethylen-bis(5-diphenylphosphino-1-inden), Ethylen-bis(4,5,6,7-tetrahydro-1-inden), Ethylen-bis(4-methyl-1-inden), Ethylen-bis(5-methyl-1-inden), Ethylen-bis(6-methyl-1-inden), Ethylen-bis(7-methyl-1-inden), Ethylen-bis(5-methoxy-1-inden), Ethylen-bis(4,7-dimethoxy-1-inden), Ethylen-bis(2,3-dimethyl-1-inden), Ethylen-bis(4,7-dimethyl-1-inden), Ethylen-bis(9-fluoren), Ethylen-bis(1-cyclopentadien), Ethylen-bis(1-inden), Ethylen-bis(1-inden)(1-cyclopentadien), Dimethylsilyl-bis(1-inden), Dimethylsilyl-bis(1-inden)(1-cyclopentadien).

Diese Verbindungen gehören zum bekannten Stand der Technik und sind beschrieben in EP-A-0 480 390, EP-A-0 413 326, EP-A-0 530 908, EP-A-0 344 887, EP-A-0 420 436, EP-A-0 416 815, EP-A-0 520 732.

Sie können hergestellt werden nach den in diesen Schriften sowie in der DE-A-44 02 192 beschriebenen Verfahren.

Als Verbindungen $(R^3R^4)_cMg$ werden solche eingesetzt, in denen $R^3$ und $R^4$ gleich oder verschieden H, $C_{1-12}$-Alkylreste sind und C = 0 oder 1 ist. Erfindungsgemäß werden bevorzugt Butyl-Ethylmagnesium, Di-n-butylmagnesium, Di-n-hexylmagnesium, n-Butyl-sec-butylmagnesium in ihren handelsüblichen Formulierungen, wie insbesondere BOMAG®-A der Firma Witco GmbH (Butyl-octyl-magnesium 20 %ig in Heptan mit einem Verhältnis von Butyl : Octyl =

3 : 1). In diesem Falle ist kein zusätzliches Lösungsmittel für die Reaktionsführung erforderlich. Der Verlauf der Reaktion kann anhand der Gasentwicklung verfolgt werden.

Die Edukte werden vorzugsweise in stöchometrischen Mengen eingesetzt.

Die Umsetzungen erfolgen in Inertgasatmosphäre und unter Ausschluß von Sauerstoff und Feuchtigkeit. Hierbei werden erfindungsgemäß bevorzugt die Komponenten bei Raumtemperatur in einem inerten Lösungsmittel vorgelegt und die Temperatur unter intensivem Rühren erhöht.

Als inerte Lösungsmittel sind die auf diesem Gebiet üblichen mitverwendbar, wie beispielsweise aliphatische und/oder cyclische Ether oder aliphatische und/oder aromatische Kohlenwasserstoffe. Erfindungsgemäß bevorzugt werden aliphatische Kohlenwasserstoffe mit Siedepunkten ≥60 °C, vorzugsweise ≥80 °C, insbesondere im Bereich von 80 - 120 °C. Die Umsetzung wird zur Erzielung praxisgerechter Reaktionszeiten vorzugsweise beim Siedepunkt der Lösungsmittel, insbesondere zwischen 80 - 120 °C, durchgeführt. Die Lösungsmittelmenge ist weitgehend unkritisch; zur Erzielung hoher Raum-Zeit-Ausbeuten wird jedoch im oberen technisch möglichen Bereich gearbeitet.

Ein Gegenstand der Erfindung sind daher Verbindungen der allgemeinen Formel (1)

$$Q(CpR_a)(Cp'R'_{a'})Mg \qquad (1)$$

$$Q(CpR_a)(NR''_{a'})Mg \qquad (1a)$$

worin

Cp = ein Cyclopentadienyl- oder ein Indenylrest
R, R' = Alkyl-, Phosphin-, Amin-, Alkylether- oder Arylethergruppen mit 0 ≤a ≤4, 0 ≤a' ≤4
Cp' = eine der Gruppen Cp
R'' = Alkyl- oder Arylrest mit a' = 1 und Q eine ein- oder mehrgliedrige Brücke zwischen Cp und Cp' oder N ist, mit
Q =

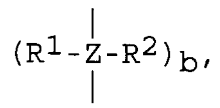

worin $R^1$ und $R^2$ gleich oder verschieden ein Wasserstoffatom, eine $C_1$-$C_{10}$-Alkylgruppe, eine $C_6$-$C_{10}$-Arylgruppe und Z Kohlenstoff, Silizium oder Germanium bedeutet mit b = 1, 2 oder 3.

Ein weiterer Gegenstand der Erfindung ist ein Verfahren zur Herstellung von Verbindungen der allgemeinen Formel $Q(CpR_a)(Cp'R'_{a'})Mg$ und $Q(CpR_a)$ $(NR''_{a'})Mg$, worin Q, Cp, R, Cp', R' und a, a' die in Anspruch 1 angegebene Bedeutung haben, durch Umsetzung von verbrückten Cyclopentadienyl-Verbindungen der allgemeinen Formel $Q(CpR_a)(Cp'R'_{a'})$oder $Q(CpR_a)(NR''_{a'})Mg$ in Gegenwart eines inerten Lösungsmittels mit einer Magnesiumverbindung $(R^3R^4)_cMg$ umgesetzt wird, worin $R^3R^4$ unabhängig voneinander H, $C_1$-$C_{12}$-Alkylreste sein können und C = 0 oder 1 ist.

Weitere Gegenstände sind durch die weiteren Ansprüche gekennzeichnet.

Die erfindungsgemäßen Verbindungen der allgemeinen Formel (1) $Q(CpR_a)(Cp'R'_{a'})Mg$ und $Q(CpR_a)(NR''_{a'})Mg$ sind wertvolle Ausgangsstoffe für die Herstellung von Metallocenen. Unter Metallocenen werden erfindungsgemäß sowohl Sandwichkomplexe als auch Halb-Sandwichkomplexe verstanden.

Diese Metallocene werden hergestellt durch Umsetzung der Verbindungen der allgemeinen Formel (1) mit Verbindungen der allgemeinen Formel $M(X)_m$, worin M ein Übergangsmetall der Gruppen 3 bis 8 des Periodischen Systems der Elemente (IUPAC Notation), insbesondere Ti, Zr, Hf, Fe ist und m der Wert der Oxidationszahl von M ist und X = ein Halogen, insbesondere Cl oder Br sein kann.

Die Umsetzung erfolgt vorteilhafterweise in Gegenwart von inerten Ethern wie aliphatischen, cycloaliphatischen und/oder aromatischen Ethern wie Diethylether, Methyl-tert-butyl-ether, Tetrahydrofuran, Dimethoxyfuran, Dimethoxyethan, inerten aliphatischen und/oder aromatischen Kohlenwasserstoffen wie Hexan, Heptan, Oktan, Toluol, Xylol.

Bevorzugt werden Ether und Kohlenwasserstoffe, in welchen die Endprodukte löslich sind.

Die Mischung der Reaktanten kann analog der in EP-A-0 420 436 und EP-A-0 416 815 beschriebenen Verfahren erfolgen.

Erfindungsgemäß wird jedoch bevorzugt so verfahren, daß das Übergangsmetallhalogenid in einem Ether oder einem aromatischen Kohlenwasserstoff vorgelegt und die zur Herstellung der Verbindungen der Formel (1) anfallende Reaktionsmischung direkt, das heißt ohne vorherige Aufarbeitung und Isolierung, in vorzugsweise stöchiometrischen Mengen zudosiert wird. Die Reaktionstemperatur wird in Abhängigkeit der Ausgangsverbindung gewählt und kann zwischen ca. -70 °C bis ca. 120 °C liegen. Erfindungsgemäß bevorzugt sind Temperaturen von -20 bis +20 °C.

Die Aufarbeitung erfolgt durch Abtrennung der Magnesiumsalze und Isolierung des Metallocens in üblicher Weise nach den auf diesem Gebiet bekannten Verfahren.

Beispiele

Alle Versuche wurden unter Ausschluß von Sauerstoff und Feuchtigkeit unter Inertgas durchgeführt.

Beispiel 1

Darstellung von Ethylen-bis(indenyl)magnesium:

10 g Inden (95 %ig; 82 mmol) wurden mit 34,2 g BOMAG®-A (20 %ig in Heptan; 41 mmol) in einem 100 ml Glaskolben bei Raumtemperatur vermischt und anschließend 4 h lang unter Rückfluß erhitzt.

Dann wurden bei Raumtemperatur 7,7 g (41 mmol) 1,2 Dibromethan und 5,3 g (41 mmol) Di-n-butylether zugegeben und erneut 3 h unter Rückfluß gerührt.

Die so hergestellte Lösung an Ethylen-bis(indenyl) wurde anschließend von dem ausgefallenen $MgBr_2$ mittels Filtration befreit.

Das Filtrat wurde mit 34,2 g BOMAG®-A (20 %ig in Heptan; 41 mmol) versetzt und 4 h refluxiert.

Es wurde auf -10 °C gekühlt und filtriert.

Der Filterrückstand wurde im Vakuum getrocknet (100 °C/0.1 mbar).

Es konnten 11,3 g (98 % der Theorie) eines farblosen Feststoffes isoliert werden.

Ethylen-bis(indenyl)magnesium:

Mg: (ber.: 8,66 %) gef.: 8,56 %
$^1$H-NMR: (DMSO) 7,2 (m,2H); 7,0 (m,2H); 6,4 (d, 2H); 6,2 (m, 4H); 5,6 (d, 2H); 3,0 (s, 4H).

Beispiel 2

Darstellung von Dimethylsilyl-bis(indenyl)magnesium:

12,2 g Inden (95 %ig; 0,1 mol) wurden mit 42 g BOMAG®-A (20 %ig in Heptan; 50 mmol) bei Raumtemperatur versetzt und danach 4 h refluxiert. Anschließend wurden bei Raumtemperatur 6,45 g $Me_2SiCl_2$ (50 mmol) und 6,5 g Di-n-butylether (50 mmol) zugesetzt und 2 h erneut refluxiert.

Nach Filtration wurde das Filtrat, das Dimethyl-bis(indenyl)silan enthält, erneut mit 42 g BOMAG®-A versetzt und 2 h refluxiert.

Danach wurde auf -20 °C gekühlt und der ausgefallene Feststoff isoliert und bei 100 °C/0,1 mbar getrocknet.

Es konnten 15,1 g (97 % der Theorie) eines weißen Feststoffes isoliert werden.

$Me_2Si(Indenyl)_2Mg$:

Mg: (ber.: 7,8 %) gef.: 7,75 %
$^1$H-NMR: (DMSO) 7,4 (d, 2H); 7,1 (d, 2H); 6,65 (d, 2H); 6,25 (t, 2H); 6,15 (t, 2H); 5,8 (d, 2H); 0,4 (s, 6H)

Beispiel 3

a: Darstellung von $Me_2Si[(Me_4Cp)(N^tBu)]Mg$:

10 g (= 40 mmol) $Me_2Si[(Me_4CpH)(^tBuNH)]$ (Literatur: Organometallics, 1990, 9, 867) wurden bei Raumtemperatur

zu 48 ml BOMAG®-A (40 mmol) gegeben und 3 h refluxiert. Anschließend wurde die Lösung auf -40 °C gekühlt und der ausgefallene Feststoff isoliert (10,5 g; 99 % d. Theorie).

Mg: (ber.: 8,9 %) gef.: 8,7 %

$^1$H-NMR: (DMSO) 1,99 (s, 6 H, $Me_2Cp$); 1,79 (s, 6 H, $Me_2Cp$); 1,09 (s, 9 H, $Me_3C$); 0,12 (s, 6 H, $Me_2Si$)

b) Darstellung von $Me_2Si[(Me_4Cp)(^tBuN)]ZrCl_2$

Es wurden 12 g (48 mmol) $Me_2Si[(Me_4CpH)(^tBuNH)]$ bei Raumtemperatur in 40 g BOMAG®-A (1,2 mol/kg; 48 mmol), vorgelegt in einem 250 ml Glaskolben, gegeben und 2 h refluxiert.

Diese frisch hergestellte Lösung wurde zügig in eine Suspension von 11,2 g $ZrCl_4$ (48 mmol) in 150 ml Diethylether bei -20 °C eingetragen.

Nachdem innerhalb von 1 h auf Raumtemperatur erwärmt wurde, wurde noch 1 h refluxiert.

Anschließend wurde das ausgefallene Magnesiumsalz abfiltriert, das klare Filtrat auf 40 ml eingeengt und auf -20 °C gekühlt.

Es konnten 15,8 g $Me_2Si[(Me_4Cp)(^tBuN)]ZrCl_2$ (38,4 mmol; 80 % d. Th.) isoliert werden.

$^1$H-NMR ($CDCl_3$): 0,62 (s, 6 H, $Me_2Si$); 1,4 (s, 9H, $Me_3C$) 2,12 (s, 6 H, $Me_2Cp$); 2,2 ppm (s, 6 H, $Me_2Cp$).

**Patentansprüche**

**1.** Verbindungen der allgemeinen Formel (1) bzw. (1a)

$$Q(CpR_a)(Cp'R'_{a'})Mg \qquad (1)$$

$$Q(CpR_a)(NR''_{a'})Mg \qquad (1a)$$

worin

Cp = ein Cyclopentadienyl- oder ein Indenylrest

R, R' = Alkyl-, Phosphin-, Amin-, Alkylether- oder Arylethergruppen mit $0 \leq a \leq 4$, $0 \leq a' \leq 4$

Cp' = eine der Gruppen Cp

R'' = Alkyl- oder Arylrest mit a' = 1 und Q eine ein- oder mehrgliedrige Brücke zwischen Cp und Cp' ist, mit Q =

$$(R^1\text{-}\overset{|}{\underset{|}{Z}}\text{-}R^2)_b,$$

worin $R^1$ und $R^2$ gleich oder verschieden ein Wasserstoffatom, eine $C_1$-$C_{10}$-Alkylgruppe, eine $C_6$-$C_{10}$-Arylgruppe und Z Kohlenstoff, Silizium oder Germanium bedeutet mit b = 1, 2 oder 3.

**2.** Verfahren zur Herstellung von Verbindungen der allgemeinen Formel $Q(CpR_a)(Cp'R'_{a'})Mg$ oder $Q(CpR_a)(NR''_{a'})Mg$, worin Q, Cp, R, Cp', R' und a, a' die in Anspruch 1 angegebene Bedeutung haben, durch Umsetzung von verbrückten Cyclopentadienyl-Verbindungen der allgemeinen Formel $Q(CpR_a)$ $(Cp'R'_{a'})$ oder $Q(CpR_a)(NR''_{a'})Mg$ in Gegenwart eines inerten Lösungsmittels mit einer Magnesiumverbindung $(R^3R^4)_cMg$ umgesetzt wird, worin $R^3R^4$ unabhängig voneinander H, $C_1$-$C_{12}$-Alkylreste sein können und C = 0 oder 1 ist.

**3.** Verfahren zur Herstellung von Cyclopentadienyl-Verbindungen gemäß Anspruch 2, dadurch gekennzeichnet, daß als Lösungsmittel Petrolether, Heptan, Oktan, Toluol, Xylol verwendet werden.

**4.** Verfahren zur Herstellung von Cyclopentadienyl-Verbindungen gemäß Anspruch 2, dadurch gekennzeichnet, daß als $R^3R^4{}_cMg$-Verbindungen, in denen c = 1 und $R^3$, $R^4$ gleich oder verschieden $C_2H_5$-, $C_4H_9$, $C_6H_{13}$-, $C_8H_{17}$ sein können oder deren Isomeren allein oder in Mischung miteinander oder untereinander verwendet werden.

**5.** Verfahren zur Herstellung von Cyclopentadienyl-Verbindungen gemäß Anspruch 4, dadurch gekennzeichnet, daß als $R^3R^4{}_cMg$ eine Verbindung mit $R^3$ = n-Butyl, $R^4$ = n-Octyl mit $R^3 : R^4 = 3 : 1$ und c = 1 verwendet wird.

**6.** Verwendung der gemäß Anspruch 1 hergestellten Komplexe $Q(CpR_a)(Cp'R'_{a'})Mg$ zur Herstellung von Verbindungen der allgemeinen Formel (2)

$$Q(CpRa)(Cp'R'_{a'})M(X)_n \qquad (2)$$

worin Q, Cp, Cp', R, R' und a, a'die in Anspruch 1 angegebene Bedeutung haben, X = Cl, Br; M = Ti, Zr, Hf, Fe und n gleich der Oxidationszahl von M ist, vermindert um 2.

**7.** Verfahren zur Herstellung von Verbindungen der allgemeinen Formel (2) $Q(CpR_a)(CP'R'_a')M(X)_n$ mit n = m-2 , durch Umsetzung von $Q(CpR_a)(Cp'R'_{a'})Mg$, worin Q, Cp, Cp', R, R', a und a' die in Anspruch 1 angegebene Bedeutung haben mit Verbindungen $M(X)_m$, worin M = Sc, Ti, Zr, Hf, Fe bedeutet mit m der Wert der Oxidationszahl von M ist und X = Cl oder Br sein kann.

**8.** Verfahren zur Herstellung von Metallocenen gemäß Anspruch 7, dadurch gekennzeichnet, daß das Übergangsmetallhalogenid $M(X)_m$ in einem Ether oder aromatischen Kohlenwasserstoff vorgelegt und die gemäß Anspruch 2 anfallende Reaktionsmischung direkt in stöchiometrischen Mengen bei -20 °C zudosiert wird.

**9.** Verwendung der gemäß Anspruch 1 hergestellten Komplexe $Q(CpR_a)(NR''_{a'})Mg$ zur Herstellung von Verbindungen der allgemeinen Formel (3)

$$Q(CpR_a)(NR''_{a'})M(X)_n \qquad (3)$$

worin Q, Cp, R, a, a', M, X, n die in Anspruch 7 angegebenene Bedeutung haben und R'' ein Alkyl- oder Arylrest ist.

**10.** Verfahren zur Herstellung von Verbindungen der allgemeinen Formel (3) $Q(CpR_a)(NR''_{a'})M(X)_n$ durch Umsetzung von $Q(CpR_a)(NR''_{a'})Mg$ mit Verbindungen $M(X)_m$ gemäß Anspruch 7.

## Claims

**1.** Compounds of the general formula (1) or (1a)

$$Q(CpR_a)(Cp'R'_{a'})Mg \qquad (1)$$

$$Q(CpR_a)(NR''_{a'})Mg \qquad (1a)$$

where

| | |
|---|---|
| Cp =a | cyclopentadienyl or an indenyl radical |
| R, R' = | alkyl, phosphine, amine, alkyl ether or aryl ether groups with 0 ≤a ≤4, 0 ≤a' ≤4 |
| Cp' = | one of the groups Cp |
| R'' = | alkyl or aryl radical with a' = 1 and Q is a single-membered or multi-membered bridge between Cp and Cp', with |
| **Q =** | |

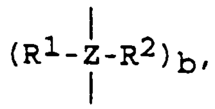

where $R^1$ and $R^2$ are identical or different and are a hydrogen atom, a $C_1$-$C_{10}$-alkyl group, a $C_6$-$C_{10}$-aryl group and Z is carbon, silicon or germanium with b = 1, 2 or 3.

**2.** Process for preparing compounds of the general formula $Q(CpR_a)(Cp'R'_{a'})Mg$ or $Q(CpR_a)(NR''_{a'})Mg$, where Q, Cp, R, Cp', R' and a, a' are as specified in Claim 1, by reaction of bridged cyclopentadienyl compounds of the general formula $Q(CpR_a)(Cp'R'_{a'})$ or $Q(CpR_a)(NR''_{a'})Mg$ in the presence of an inert solvent with a magnesium compound $(R^3R^4)_cMg$, where $R^3R^4$ can, independently of one another, be H, $C_1$-$C_{12}$-alkyl radicals and C = 0 or 1.

3. Process for preparing cyclopentadienyl compounds according to Claim 2, characterized in that solvents used are petroleum ether, heptane, octane, toluene, xylene.

4. Process for preparing cyclopentadienyl compounds according to Claim 2, characterized in that use is made of $R^3R^4_cMg$ compounds in which c = 1 and $R^3$, $R^4$ can be identical or different and can be $C_2H_5$-, $C_4H_9$, $C_6H_{13}$-, $C_8H_{17}$ or their isomers alone or as mixtures with one another or among one another.

5. Process for preparing cyclopentadienyl compounds according to Claim 4, characterized in that as $R^3R^4_cMg$ use is made of a compound having $R^3$ = n-butyl, $R^4$ = n-octyl with $R^3 : R^4 = 3 : 1$ and c = 1.

6. Use of the complexes $Q(CpR_a)(Cp'R'_{a'})Mg$ prepared according to Claim 1 for preparing compounds of the general formula (2)

$$Q(CpRa)(Cp'R'_{a'})M(X)_n \qquad (2)$$

where Q, Cp, Cp', R, R' and a, a' are as specified in Claim 1, X = Cl, Br; M = Ti, Zr, Hf, Fe and n is equal to the oxidation state of M reduced by 2.

7. Process for preparing compounds of the general formula (2) $Q(CpR_a)(Cp'R'_{a'})M(X)_n$ with $n = m-2$ , by reaction of $Q(CpR_a)(Cp'R'_{a'})Mg$, where Q, Cp, Cp', R, R', a and a' are as defined in Claim 1, with compounds $M(X)_m$, where M = Sc, Ti, Zr, Hf, Fe with m being the numerical value of the oxidation state of M and X can be Cl or Br.

8. Process for preparing metallocenes according to Claim 7, characterized in that the transition metal halide $M(X)_m$ is initially charged in an ether or aromatic hydrocarbon and the reaction mixture obtained according to Claim 2 is directly metered in at -20°C in stoichiometric amounts.

9. Use of the complexes $Q(CpR_a)(NR''_{a'})Mg$ prepared according to Claim 1 for preparing compounds of the general formula (3)

$$Q(CpR_a)(NR''_{a'})M(X)_n \qquad (3)$$

where Q, Cp, R, a, a', M, X, n are as defined in Claim 7 and R'' is an alkyl or aryl radical. 10. Process for preparing compounds of the general formula (3) $Q(CpR_a)(NR''_{a'})M(X)_n$ by reaction of $Q(CpR_a)(NR''_{a'})Mg$ with compounds $M(X)_m$ according to Claim 7.

**Revendications**

1. Composés de formule générale (1) respectivement (1a)

$$Q(CpR_a)(Cp'R'_{a'})Mg \qquad (1)$$

$$Q(CpR_a)(NR''_{a'})Mg \qquad (1a)$$

dans laquelle

Cp = un radical cyclopentadiényle ou un radical indényle,
R, R' = des groupements alkyle, un groupement phosphine, un groupement amine, un groupement alkyléther ou un groupement aryléther avec $0 \leq a \leq 4$, $0 \leq a' \leq 4$
Cp' = un des groupements Cp
R'' = un radical alkyle ou un radical aryle, avec a' égal à 1 et Q représentant un pont à un ou plusieurs membres entre Cp et Cp', avec

Q= 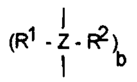 ,

ou $R^1$ et $R^2$ sont identiques ou différents et signifient un atome d'hydrogène, un groupement alkyle en $C_1$-$C_{10}$, un groupement aryle en $C_6$-$C_{10}$ et où Z signifie du carbone, du silicium ou du germanium, avec b égal à 1, 2 ou 3.

**2.** Procédé pour la préparation de composés de formule générale $Q(CpR_a)(Cp'R'_{a'})Mg$ ou $Q(CpR_a)(NR''_{a'})Mg$, dans laquelle Q, Cp, R, Cp', R' et a, a' ont la signification indiquée dans la revendication 1 par réaction de composés cyclopentadiéniques pontés de formule générale $Q(CpR_a)(Cp'R'_{a'})$ ou $Q(CpR_a)(NR''_{a'})Mg$ en présence d'un solvant inerte avec un composé de magnésium $(R^3R^4)_cMg$, dans lequel $R^3R^4$ peuvent être, indépendamment l'un de l'autre, de l'hydrogène, des radicaux alkyle en $C_1$-$C_{12}$ et dans lequel c est égal à 0 ou 1.

**3.** Procédé pour la préparation de composés cyclopentadiéniques selon la revendication 2, caractérisé en ce qu'on utilise comme solvant, de l'éther de pétrole, de l'heptane, de l'octane, du toluène, du xylène.

**4.** Procédé pour la préparation de composés cyclopentadiéniques selon la revendication 2, caractérisé en ce qu'on utilise comme composés $(R^3R^4)_cMg$, où c est égal à 1 et $R^3$, $R^4$ peuvent être identiques ou différents et représenter $C_2H_5$-, $C_4H_9$-, $C_6H_{13}$-, $C_8H_{17}$ ou leurs isomères, seuls ou un en mélange l'un avec l'autre ou en mélange l'un dans l'autre.

**5.** Procédé pour la préparation de composés cyclopentadiéniques selon la revendication 4, caractérisé en ce qu'on utilise comme composés $(R^3R^4)_cMg$ un composé avec $R^3$ = n-butyle, $R^4$ = n-octyle, avec $R^3$:$R^4$ = 3:1 et c = 1.

**6.** Utilisation des complexes $Q(CpR_a)(Cp'R'_{a'})Mg$ préparés selon la revendication 1 pour la préparation de composés de formule générale (2)

$$Q(CpR_a)(Cp'R'_{a'})M(X)_n \qquad (2)$$

dans laquelle Q, Cp, Cp', R, R' et a, a' ont la signification indiquée dans la revendication 1, X = Cl, Br ; M = Ti, Zr, Hf, Fe et n est égal à l'indice d'oxydation de M, diminué de 2.

**7.** Procédé pour la préparation de composés de formule générale (2) $Q(CpR_a)(Cp'R'_{a'})M(X)_n$ avec $n=m-2$ , par transformation de $Q(CpR_a)(Cp'R'_{a'})Mg$, où Q, Cp, Cp', R, R', a et a' ont la signification indiquée dans la revendication 1 avec des composés $M(X)_m$, où M signifie = Sc, Ti, Zr, Hf, Fe avec m représentant la valeur de l'indice d'oxydation de M et X pouvant être = Cl ou Br.

**8.** Procédé pour la préparation de métallocènes selon la revendication 7, caractérisé en ce qu'on mette au préalable l'halogénure du métal de transition $M(X)_m$ dans un éther ou un hydrocarbure aromatique et en ce qu'on ajoute par dosage directement en quantités stoechiométriques à -20°C le mélange réactionnel produit selon la revendication 2.

**9.** Utilisation des complexes $Q(CpR_a)(Cp'R'_{a'})Mg$ préparés selon la revendication 1 pour la préparation de composés de formule générale (3)

$$Q(CpR_a)(NR''_{a'})M(X)_n \qquad (3)$$

dans laquelle Q, Cp, R, a, a', M, X, n ont la signification indiquée dans la revendication 7 et R'' est un radical alkyle ou un radical aryle.

**10.** Procédé pour la préparation de composés de formule générale (3) $Q(CpR_a)(NR''_{a'})M(X)_n$ par transformation de $Q(CpR_a)(NR''_{a'})Mg$ avec des composés $M(X)_m$ selon la revendication 7.